# EUROPÄISCHE PATENTSCHRIFT

(11) **EP 3 204 929 B1**
(45) Veröffentlichungstag und Bekanntmachung des Hinweises auf die Patenterteilung: **22.07.2020**
(21) Anmeldenummer: 15797273.8
(22) Anmeldetag: 09.11.2015
(51) Int. Cl.: G08G 1/14, B60L 1/00

(54) **SYSTEM ZUR ANZEIGE VON PARKPLÄTZEN**
SYSTEM FOR DISPLAYING PARKING SPACES
SYSTÈME POUR AFFICHER DES PLACES DE STATIONNEMENT

(30) Priorität: 11.11.2014 DE 102014116455; 30.10.2015 DE 102015118598
(43) Veröffentlichungstag der Anmeldung: 16.08.2017
(73) Patentinhaber: Cleverciti Systems GmbH, 82319 Starnberg (DE)
(72) Erfinder: HOHENACKER, Thomas, 82319 Starnberg (DE)
(74) Vertreter: Manitz Finsterwald Patent- und Rechtsanwaltspartnerschaft mbB
(86) Internationale Anmeldenummer: PCT/EP2015/076085
(87) Internationale Veröffentlichungsnummer: WO 2016/075086

(56) Entgegenhaltungen:
- EP-A2- 2 138 653
- DE-A1-102012 022 038
- DE-A1-102013 205 810
- US-A- 5 847 755
- US-B1- 6 285 297
- US-B1- 8 704 680

## Beschreibung

In Innenstädten ist ein hoher Anteil des Fahraufkommens durch Fahrzeuge bedingt, deren Fahrer sich lediglich auf Parkplatzsuche befinden. Dies führt neben einem unerwünscht hohen Zeitaufwand und ebenso unerwünscht hohen Benzinkosten auch zu einer nachteiligen Umweltbelastung durch den erwähnten Suchverkehr. Somit wirkt sich die in Innenstädten bestehende Parkplatznot sowohl für die auf Parkplatzsuche befindlichen Fahrer von Kraftfahrzeugen als auch hinsichtlich der Umweltbeeinflussung negativ aus.

Ein Verfahren zur Überwachung und Verwaltung von Parkraum, bei welchem die Belegung von Parkbuchten erfasst und ausgewertet wird, ist aus dem Dokument EP 2 138 653 A2 bekannt. Hierbei werden die Parkbuchten mit einer Videooptik erfasst und die Videobilddaten ortsaufgelöst einer Bildanalyse unterzogen. Aus den Videobilddaten können freie Parkplatzbereiche extrahiert werden, wobei diese Informationen an ein Parkleitsystem oder an eine Anzeigetafel an einer Parkplatzeinfahrt übermittelt werden können.

Weiterhin beschreibt die US 5 847 755 A eine Vorrichtung und ein Verfahren, um Bewegungen eines Objektes in einer, beispielsweise im Rahmen eines Verkehrsüberwachungssystems mit einer Videokamera erzeugten Abfolge von Bildern zu detektieren. Um Bewegungen der Videokamera zu detektieren und zu korrigieren, werden Positionen von Landmarken in jedem einzelnen Bild bestimmt und daraus die notwendigen Korrekturen relativ zu den Positionen der Landmarken in einem Referenzbild berechnet.

Eine Aufgabe der Erfindung besteht darin, ein System zur Anzeige von Parkplatzbereichen zu schaffen, das eine verbesserte und im Idealfall optimale Auslastung der beispielsweise in Innenstadtbereichen zur Verfügung stehenden Parkplatzbereiche ermöglicht. Insbesondere soll es erfindungsgemäß möglich werden, die auf Parkplatzsuche befindlichen Fahrer von Kraftfahrzeugen auf dem kürzesten bzw. schnellsten Weg zu freien Parkplatzbereichen zu leiten.

Diese Aufgabe wird gelöst durch ein System gemäß Anspruch 1.

Erfindungsgemäß werden also innerhalb jeder von einem Kamerasystem überwachten Parkplatzfläche freie Parkplatzbereiche dynamisch ermittelt und angezeigt. Um das erfindungsgemäße System zu realisieren, wirken zumindest ein Kamerasystem, zumindest eine Erkennungseinheit, zumindest eine Sendeeinheit und zumindest ein Anzeigegerät zusammen. Das Kamerasystem ist dabei an einer Straßenbeleuchtungseinrichtung montiert, wodurch auf vorteilhafte Weise erreicht wird, dass für die Montage keine Erlaubnis von privaten Gebäudebesitzern eingeholt werden muss. Zudem kann bei Bedarf die Energiequelle der Straßenbeleuchtungseinrichtung die Energieversorgung des Kamerasystems und damit verbundener Komponenten ermöglichen, alternativ ist aber auch ein Akkuoder Batteriebetrieb möglich.

Das Kamerasystem ist so montiert und ausgerichtet, dass es bevorzugt jeweils mehrere Parkplatzbereiche einer Parkplatzfläche erfassen kann. Die vom Kamerasystem an die Erkennungseinheit gelieferten Abbildindizien der Parkplatzbereiche können beispielsweise Bildaufnahmen der kompletten Parkplatzbereiche oder aber auch nur Bilder von Teilbereichen der Parkplatzbereiche sein. Die Abbildindizien müssen lediglich einen Parkplatzbereich in solch einer Weise repräsentieren, dass die Erkennungseinheit anhand der Abbildindizien den Parkplatzbereichen einen Belegungsstatus zuordnen kann, der kennzeichnet, ob ein jeweiliger Parkplatzbereich frei oder besetzt ist. Der durch die Erkennungseinheit ermittelte Belegungsstatus eines Parkplatzbereiches wird dann seinen jeweiligen geografischen Koordinaten zugeordnet, die in der Erkennungseinheit abgespeichert sind. Daraufhin werden diese geografischen Koordinaten gemeinsam mit dem zugehörigen Belegungsstatus der Sendeeinheit übermittelt, die diese Daten dann an das Anzeigegerät sendet, das optisch oder akustisch veranschaulicht, an welchen geografischen Orten sich freie Parkplatzbereiche befinden.

Als Anzeigegerät kann bevorzugt ein internetfähiges, mobiles oder stationäres Endgerät zum Einsatz gelangen. Besonders bevorzugt ist es, wenn das Anzeigegerät als internetfähiges Mobiltelefon oder als internetfähiger Fahrzeugcomputer ausgestaltet ist. Ebenso kann aber auch ein stationärer Computer oder eine Anzeigetafel zum Einsatz gelangen.

Die Sendeeinheit kann die genannten Daten an eine Vielzahl von Anzeigegeräten - unterschiedlicher Nutzer liefern, denen jeweils veranschaulicht werden kann, an welchen Orten sie freie Parkplatzbereiche finden können.

Mittels des erfindungsgemäßen Systems kann folglich eine Vielzahl von beispielsweise öffentlichen Parkplatzbereichen gemeinsam mit ihrem jeweiligen Belegungsstatus erfasst werden, wobei auf Basis der erfassten Daten einer großen Anzahl von Nutzern mitgeteilt werden kann, wo sich zu einem aktuellen Zeitpunkt gerade freie Parkplatzbereiche befinden, die dann gezielt und auf dem kürzesten Weg angefahren werden können.

Die erfindungsgemäß zum Einsatz gelangende Erkennungseinheit kann sich vollständig im Gehäuse des Kamerasystems befinden, es können aber auch nur Teile der Erkennungseinheit im Gehäuse des Kamerasystems untergebracht sein. In letztgenanntem Fall befinden sich die restlichen Teile der Erkennungseinheit in der Regel im Bereich der Sendeeinheit, insbesondere innerhalb eines Servers, der auch die Sendeeinheit beinhaltet. Die Sendeeinheit kann räumlich beabstandet von der Straßenbeleuchtungseinrichtung beispielsweise in einem Serverraum untergebracht sein, wobei der Server bevorzugt drahtlos Belegungsstatusinformationen oder Abbildindizien bzw. Daten von mehreren Kamerasystem und/oder Erkennungseinheiten zur Verfügung gestellt bekommt.

Erfindungsgemäß ist die Erkennungseinheit dazu ausgebildet, Bewegungen des Kamerasystems, welche durch Bewegungen der Straßenbeleuchtungseinrichtung relativ zur Parkplatzfläche bedingt sind, in den vom Kamerasystem gelieferten Abbildindizien mittels eines Bildverarbeitungsverfahrens derart zu kompensieren, dass die Abbildindizien durch die Bewegungen des Kamerasystems nicht verfälscht sind. Somit können Bewegungen der Straßenbeleuchtungseinrichtung, die beispielsweise durch Wind bedingt sind, durch eine elektronische Bildstabilisierung kompensiert werden. Zu diesem Zweck können möglichst in der Bildmitte Referenzpunkte, wie z.B. Ampeln, Markierungen an Häusern oder Straßenschilder, festgelegt werden, welche eine unveränderliche Position relativ zu den erfassten Parkplatzbereichen besitzen.

Erfindungsgemäß ist eine Markierung an einem Trägerelement ("Leuchtenmast") der Straßenbeleuchtungseinrichtung angebracht, insbesondere in einem bodennahen Bereich des Trägerelements. Dies hat den Vorteil, dass die Markierung auch z.B. bei starkem Wind ihre Position kaum verändert und üblicherweise von dem Kamerasystem gut erfasst werden kann. Die Abbildindizien der Parkplatzbereiche können dann unabhängig von ihrer absoluten Position innerhalb des Bildes lediglich in Abhängigkeit ihrer Position relativ zu den Referenzpunkten bzw. zu der Markierung verarbeitet werden, wodurch sich die genannten Bewegungen der Straßenbeleuchtungseinrichtungen bei der Verarbeitung eliminieren lassen.

Zusätzlich kann auch eine Zusatzmarkierung an dem Trägerelement angebracht sein, die zu der Markierung beabstandet angeordnet ist. Aufgrund einer Verschiebung der Relativpositionen von Markierung und Zusatzmarkierung kann beispielsweise eine Verwindung des Trägerelements ermittelt werden. Hierdurch können Positionsveränderungen des Kamerasystems noch genauer bestimmt werden.

Zusätzlich können die Erkennungseinheit und/oder das Kamerasystem zumindest einen Beschleunigungssensor und/oder ein Gyroskop zur Erfassung von Bewegungen der Straßenbeleuchtungseinrichtung und des an ihr montierten Kamerasystems aufweisen. Mittels derartiger Komponenten lässt sich eine Rotation des Kamerasystems ebenso erfassen, wie Bewegungen entlang dreier orthogonaler Achsen. Aufgrund der von Beschleunigungssensor bzw. Gyroskop gelieferten Messdaten können die Abbildindizien des Kamerasystems wiederum so verarbeitet werden, dass sie durch Bewegungen der Straßenbeleuchtungseinrichtung nicht verfälscht werden.

Es existieren somit letztlich zwei unterschiedliche Methoden, Bewegungen der Straßenbeleuchtungseinrichtung zu kompensieren, wobei diese beiden Methoden kombiniert angewendet werden können. In der Regel wird die Kompensation mittels eines Bildverarbeitungsverfahrens dann eingesetzt, wenn gute und brauchbare Referenzpunkte zur Verfügung stehen. Sollte dies nicht der Fall sein, können Beschleunigungssensor bzw. Gyroskop eingesetzt werden.

Besonders bevorzugt ist es, wenn ein Großteil der Auswertung der Abbildindizien innerhalb der im Gehäuse des Kamerasystems untergebrachten Erkennungseinheit erfolgt, da dann nur die aus der Auswertung resultierenden Daten an die Sendeeinheit bzw. den Server übertragen werden müssen. Der Umfang dieser Daten ist deutlich geringer als die vom Kamerasystem gelieferten Daten bzw. Abbildindizien, so dass für die Übertragung dieser Daten von der Erkennungseinheit an den Server bzw. an die Sendeeinheit nur eine geringe Bandbreite benötigt wird. Zudem werden dann im Server nur Auswertungsdaten gespeichert oder verarbeitet, die unter Datenschutzaspekten unkritisch sind, da solche Auswertungsdaten im Unterschied zu den Abbildindizien beispielsweise keine Kfz-Kennzeichen umfassen.

Wenn beispielsweise entlang einer langen Straße Kamerasysteme an unterschiedlichen Straßenbeleuchtungseinrichtungen montiert sind, ist es nicht nötig, dass jedem Kamerasystem eine eigene Erkennungseinheit zugeordnet ist, die jeweils mit der Sendeeinheit bzw. einem Server kommuniziert. Vielmehr ist es in diesem Fall sinnvoll, dass nur eine oder wenige der Erkennungseinheiten die genannte Kommunikation übernehmen, wohingegen die anderen Erkennungseinheiten ihre Daten mit einem schmalbandigen Übertragungssystem an die eine oder wenige Erkennungseinheiten übertragen, die dann mit der Sendeeinheit bzw. dem Server kommunizieren.

Alternativ findet die Auswertung der Abbildindizien ausschließlich innerhalb eines Gehäuses des Kamerasystems und insbesondere ausschließlich in der Erkennungseinheit statt. Dies bedeutet, dass außer dem Belegungsstatus, der z.B. die Koordinaten von freien und besetzten Parkplatzbereichen angibt, keine weiteren Daten das Gehäuse des Kamerasystems verlassen müssen. Hierfür können das Kamerasystem und die Erkennungseinheit in einem gemeinsamen Gehäuse angeordnet sein, wobei insbesondere das Gehäuse des Kamerasystems das gemeinsame Gehäuse bildet. Die von dem Kamerasystem aufgenommenen Bilder bzw. die Abbildindizien können somit innerhalb des Gehäuses verarbeitet und anschließend verworfen werden. Auch strenge Datenschutzvorgaben, die den öffentlichen Raum betreffen, können auf diese Weise erfüllt werden, da keine Bilddaten, Personeninformationen und dergleichen gespeichert oder ausgegeben werden.

Bevorzugt umfassen die Abbildindizien ausschließlich Einzelbilder, d.h. Standbilder. Dies bedeutet, die Auswertung in der Erkennungseinheit kann nur auf Einzelbildern basieren. Dabei kann der jeweilige Belegungsstatus alleine anhand nur eines Einzelbildes ermittelt werden. Alternativ oder zusätzlich können auch Unterschiede zwischen zwei Einzelbildern desselben Ausschnitts der Parkplatzfläche (d.h. Unterschiede zwischen zwei Abbildindizien) zur Ermittlung des Belegungsstatus herangezogen werden.

Insbesondere können nacheinander jeweils Einzelbilder verschiedener Bereiche der Parkplatzfläche erfasst werden. Bei der Verwendung eines schwenkbaren Kamerasystems kann das Kamerasystem nach der Aufnahme eines Einzelbildes geschwenkt werden und einen anderen Bereich der Parkplatzfläche erfassen. Werden mehrere Kameras verwendet, können die Kameras nacheinander jeweils ein Einzelbild aufnehmen und an die Erkennungseinheit übermitteln.

Weiter bevorzugt ist die Erkennungseinheit ausgebildet, einen Belegungsstatus unabhängig von vorgegebenen, beispielsweise durch Bodenlinien definierten, Parkplatzbereichen zu ermitteln. Dies bedeutet, dass auf einer Parkplatzfläche auch Parkplatzbereiche als frei erkannt werden können, wenn die Parkplatzbereiche nicht durch Linien, Rechtecke und dergleichen als solche gekennzeichnet sind. Die Erkennung von freien Parkplatzbereichen kann somit im gesamten Sichtbereich des Kamerasystems durchgeführt werden, unabhängig davon ob die Parkplatzbereiche als solche markiert sind, oder nicht.

Die Erkennungseinheit kann ferner ausgebildet sein, die Größe eines jeweils als frei erkannten Parkplatzbereichs zu ermitteln und zusammen mit dem Belegungsstatus auszugeben. Anhand der Größe kann ein freier Parkplatzbereich einem in seinen Abmessungen passenden Fahrzeug zugeteilt werden, wodurch die Anzahl der auf einer Parkplatzfläche abstellbaren Fahrzeuge erhöht werden kann.

Gemäß einer vorteilhaften Ausführungsform ist das Kamerasystem eingerichtet, eine Belichtungszeit in einem im Wesentlichen unbegrenzten Zeitbereich in Abhängigkeit der Helligkeit im Sichtbereich des Kamerasystems einzustellen. Aufgrund der über einen weiten Zeitbereich einstellbaren Belichtungszeit wird es ermöglicht, auch bei Dunkelheit auswertbare Abbildindizien zu erzeugen, ohne auf eine zusätzliche Beleuchtung (z.B. eine Infrarotbeleuchtung) angewiesen zu sein. Die Belichtungszeit kann bevorzugt anhand der Helligkeit in einem Teilbereich des Sichtbereichs eingestellt werden. Beispielsweise können im Sichtbereich zwei quadratische Teilbereiche vorgegeben sein, innerhalb derer die Helligkeit bestimmt wird.

Die Möglichkeit im Wesentlichen beliebige Belichtungszeiten zu verwenden ergibt sich aus der Aufnahme von Einzelbildern, für die die jeweilige Belichtungszeit frei gewählt werden kann. Hierdurch entsteht ein Vorteil gegenüber Video-basierten Systemen, bei welchen die maximale Belichtungszeit von der Bildrate abhängt und nicht beliebig groß eingestellt werden kann.

Wegen der längeren Belichtungszeit bei Dunkelheit kann die Anzahl der aufgenommenen Abbildindizien pro Zeiteinheit zurückgehen. Allerdings verändert sich der Belegungszustand von Parkplatzbereichen nicht in sehr kurzen Zeitabständen, sodass auch sehr lange Belichtungszeiten von mehreren Sekunden für eine ausreichend genaue Überwachung der Parkplatzbereiche genügen. Bevorzugt kann eine maximale Belichtungszeit von zwei Sekunden vorgegeben werden.

Besonders vorteilhaft ist es, wenn das Kamerasystem einen elektrisch ansteuerbaren Schwenk-Neigekopf zur Bewegung zumindest einer Kameraoptik relativ zur Parkplatzfläche und/oder ein Zoomobjektiv aufweist. Durch die Bewegung des Schwenk-Neigekopfs und/oder durch Einstellung des Zoomobjektivs kann die gesamte, einem Kamerasystem zugeordnete Parkplatzfläche mit hoher Auflösung erfasst werden. Es wird auf diese Weise ein periodisches, exaktes Abfahren der kompletten Parkplatzfläche möglich, wobei im Rahmen eines Initialisierungsprozesses eine Reihe von Positionen des Schwenk-Neigekopfs mit zugehörigen Zoomeinstellungen festgelegt werden kann. Diese Positionen werden dann jeweils durch eine schnelle Bewegung des Schwenk-Neigekopfs und durch eine parallel erfolgende Zoomeinstellung angefahren, woraufhin ein Bild aufgenommen wird, so dass danach die nächste Position angefahren werden kann. Bereits während der Verstellung des Schwenk-Neigekopfs zwischen zwei Positionen können zuvor aufgenommene Bilder bzw. Abbildindizien von der Erkennungseinheit verarbeitet werden.
Besonders vorteilhaft ist die Tatsache, dass bei Einsatz eines Schwenk-Neigekopfs die Initialisierung und somit die jeweils erforderliche Ausrichtung des Kamerasystems nach dessen Montage an der Straßenbeleuchtungseinrichtung elektronisch und remote von geschultem Fachpersonal vorgenommen werden kann, da während der Montage selbst noch keinerlei Justierung nötig ist.

Alternativ oder zusätzlich zum Einsatz eines Schwenk-Neigekopfs kann das an der Straßenbeleuchtungseinrichtung angebrachte Kamerasystem auch eine Mehrzahl von relativ zueinander stationären, unterschiedlich zueinander orientierten Kameras aufweisen. Diese einzelnen Kameras decken dann die dem jeweiligen Kamerasystem zugeordnete Parkplatzfläche nahtlos und vollständig ab, insbesondere ohne dass hierfür eine Bewegung dieser Kameras nötig ist.

Sowohl durch den Einsatz eines Kamerasystems mit mehreren Kameras als auch durch den Einsatz eines Schwenk-Neigekopfs mit verstellbarem Zoomobjektiv lässt sich erreichen, dass Verzerrungen durch Weitwinkelobjektive weitgehend vermieden werden. In jedem Fall ist es sinnvoll, einen maximalen Kamerablickwinkel zur Aufnahme der Abbildindizien so zu wählen, dass keine Bildverzerrungen auftreten, alternativ ist es jedoch auch möglich, beim Auftreten von Verzerrungen eine rechnergestützte Entzerrung durchzuführen.

Auch wenn ein Kamerasystem mit mehreren unterschiedlich orientierten Kameras eingesetzt wird, ist es sinnvoll, dieses Kamerasystem über eine Schwenk-Neige-Mechanik an der Straßenbeleuchtungseinrichtung anzubringen, da so auch in diesem Fall eine Initialisierung bzw. Ausrichtung des Kamerasystems erst nach der Montage durch geschultes Fachpersonal vorgenommen werden kann.

Gemäß einer bevorzugten Ausführungsform umfasst das Kamerasystem zumindest zwei feststehende unterschiedlich orientierte Kameras, deren Sichtbereiche sich zumindest bereichsweise überlappen. In dem sich überlappenden Sichtbereich kann bevorzugt die Markierung und die Zusatzmarkierung bzw. der Referenzpunkt zur Kompensation von Bewegungen des Kamerasystems angeordnet sein. Vorteilhafterweise wertet die Erkennungseinheit zu einem Zeitpunkt oder während eines Zeitintervalls jeweils nur die Abbildindizien genau einer Kamera aus. Die jeweils andere Kamera oder die anderen Kameras kann/können zu dem Zeitpunkt bzw. während des Zeitintervalls abgeschaltet werden. Hierbei ist von Vorteil, dass der Energieverbrauch des Systems reduziert werden kann. Zudem ergibt sich die Möglichkeit lediglich genau einen Prozessor (bzw. Mikroprozessor) in der Erkennungseinheit vorzusehen, der alternierend mit einer der jeweiligen Kameras gekoppelt wird. Auf diese Weise können die Materialkosten des Systems reduziert werden.

Besonders vorteilhaft ist es, wenn das Kamerasystem an einer Auskragung der Straßenbeleuchtungseinrichtung befestigt ist. An einer solchen Auskragung sind in der Regel auch die Beleuchtungsmittel der Straßenbeleuchtungseinrichtung angeordnet, so dass man mit hoher Wahrscheinlichkeit davon ausgehen kann, dass sich zwischen der Auskragung und der zu beleuchtenden bzw. vom Kamerasystem zu erfassenden Fläche keine Gegenstände, wie beispielsweise Bäume, befinden. Insofern wird durch die Befestigung des Kamerasystems an der Auskragung erreicht, dass das Sichtfeld des Kamerasystems mit hoher Wahrscheinlichkeit nicht durch störende Gegenstände beschränkt ist.

Diese Wahrscheinlichkeit lässt sich zusätzlich erhöhen, wenn das Kamerasystem benachbart zu einem Beleuchtungsmodul der Straßenbeleuchtungseinrichtung derart angeordnet ist, dass der Abstand zwischen Kamerasystem und dem Trägerelement, beispielsweise dem Leuchtenmast, größer ist als der Abstand zwischen dem Beleuchtungsmodul und dem Trägerelement. Das Kamerasystem befindet sich dann möglichst weit weg vom Trägerelement und somit auch im maximalen Abstand zu Bäumen, die im Bereich des Trägerelements vorhanden sein können.

Wenn das Kamerasystem an einer Auskragung der Straßenbeleuchtungseinrichtung befestigt ist, kann dieses mit oder ohne Erkennungseinheit teilweise oder vollständig in die der Straßenbeleuchtungseinrichtung zugeordnete Beleuchtungseinheit integriert werden. Alternativ, aber weniger bevorzugt, ist natürlich auch eine Montage von Kamerasystem und/oder Erkennungseinheit am Trägerelement der Straßenbeleuchtungseinrichtung möglich.

Eine besonders vorteilhafte optische Gestaltung des erfindungsgemäßen Systems ergibt sich dann, wenn das Kamerasystem mit oder ohne Erkennungseinheit ein Gehäuse aufweist, dessen Form an die Form eines Gehäuseabschnitts der Straßenbeleuchtungseinrichtung angepasst ist. Das Kamerasystem und ggf. die Erkennungseinheit sind in diesem Fall dann von außen nicht mehr als separate Einheiten erkennbar.

Vorteilhaft ist es ferner, wenn die Straßenbeleuchtungseinrichtung einerseits eine Profilnut mit konstantem Querschnitt und ein Beleuchtungsmodul und das Kamerasystem andererseits jeweils einen dazu komplementären Profilfortsatz zur Kopplung mit der Profilnut aufweisen. Ebenso kann auch umgekehrt der Profilfortsatz an der Straßenbeleuchtungseinrichtung und die Profilnut am Beleuchtungsmodul und Kamerasystem vorhanden sein. Ein solches System ermöglicht eine besonders einfache Kopplung zwischen Beleuchtungsmodul/Kamerasystem und Straßenbeleuchtungseinrichtung, wobei insbesondere je nach Bedarf eine unterschiedliche Anzahl von Beleuchtungsmodulen mit der Straßenbeleuchtungseinrichtung koppelbar sind.

Alternativ ist es auch möglich, zumindest ein Beleuchtungsmodul und/oder das Kamerasystem jeweils ausschließlich mittels einer Magnetkopplung an der Straßenbeleuchtungseinrichtung zu befestigen. Hierdurch wird eine besonders schnelle und einfache Montage möglich.

Weiterhin kann es sich bei der Straßenbeleuchtungseinrichtung um ein lampentragendes Seilsystem handeln, welches beispielsweise zwischen mehreren Gebäuden installiert ist. Eine Seilverankerung kann Bestandteil der Straßenbeleuchtungseinrichtung sein, wobei das Kamerasystem an der Seilverankerung angebracht sein kann.

Die Erkennungseinheit kann dazu ausgebildet sein, die Helligkeit von Beleuchtungsmodulen der Straßenbeleuchtungseinrichtung in Abhängigkeit von aus den Abbildindizien ermittelten Parametern, insbesondere in Abhängigkeit von Helligkeitswerten und/oder detektierten Bewegungen zu steuern bzw. anzuschalten, abzuschalten oder zu dimmen. Dieser erfindungsgemäßen, unter Energieeinsparungsaspekten interessanten Variante liegt die Erkenntnis zugrunde, dass eine vergleichsweise starke Beleuchtung der Parkplatzfläche nur dann nötig ist, wenn es dunkel ist und zugleich eine Bewegung von Fußgängern bzw. Autos detektiert wird. In anderen Fällen genügt eine abgedunkelte Beleuchtung, welche allerdings ausreichen muss, um die Parkplatzbereiche mittels des Kamerasystems mit ausreichender Auflösung zu erkennen. Beispielsweise kann bei Schnee auf der Parkplatzfläche die Beleuchtung gedimmt werden, wohingegen bei Laub auf der Parkplatzfläche die Beleuchtung verstärkt wird. Zudem wird es durch die genannte Variante möglich, die Beleuchtungsmodule zu dimmen, wenn die Parkplatzfläche bereits durch Autoscheinwerfer beleuchtet wird.

Besonders bevorzugt ist es, wenn die Erkennungseinheit dazu ausgebildet ist, die Helligkeit von Beleuchtungsmodulen der ihr zugeordneten und weiteren Straßenbeleuchtungseinrichtungen in Abhängigkeit von aus den Abbildindizien ermittelten Parametern, insbesondere in Abhängigkeit von Helligkeitswerten und/oder detektierten Bewegungen zu steuern. In diesem Fall können dann auch Straßenbeleuchtungseinrichtungen, die benachbart zum erfindungsgemäßen System vorhanden sind und kein erfindungsgemäßes System aufweisen, entsprechend angeschaltet, abgeschaltet oder gedimmt werden. Auf diese Weise lässt sich die Montage eines erfindungsgemäßen Systems an jeder Straßenbeleuchtungseinrichtung vermeiden, vielmehr genügt es, wenn das erfindungsgemäße System lediglich an einigen Straßenbeleuchtungseinrichtungen vorhanden ist, die dann die anderen Straßenbeleuchtungseinrichtungen ebenfalls mit ansteuern.

Vorteilhaft ist es, wenn an der Straßenbeleuchtungseinrichtung ein Solarpanel montiert ist, welches zur Energieversorgung von Kamerasystem und ggf. Erkennungseinheit dient. In diesem Fall erübrigt sich eine Speisung von Kamerasystem und ggf. Erkennungseinheit durch die in der Straßenbeleuchtungseinrichtung ohnehin zur Verfügung stehende Netzspannung.

Besonders bevorzugt ist es, wenn die Straßenbeleuchtungseinrichtung eine Energieversorgungseinheit für Elektroautos aufweist. Eine solche Energieversorgungseinheit bzw. e-Tankstelle kann dann mit der erfindungsgemäßen Erkennungseinheit direkt per Kabel oder drahtlos kommunizieren, so dass die Erkennungseinheit Daten der e-Tankstelle an einen entfernt angeordneten Server schicken kann, um so letztlich die Datenkommunikation der e-Tankstelle mit dem Server übernehmen zu können.

Es ist von Vorteil, wenn die Erkennungseinheit dazu ausgelegt ist, zu detektieren, ob die Energieversorgungseinheit bzw. e-Tankstelle im Tankmodus oder im Bereitschaftsmodus betrieben wird, um in Abhängigkeit vom detektierten Betriebsmodus eine entsprechende Statusinformation gemeinsam mit den geografischen Koordinaten der zugehörigen Straßenbeleuchtungseinrichtung einer Sendeeinheit zur Verfügung zu stellen. Die Sendeeinheit ist dann dazu ausgebildet, den jeweiligen Betriebsmodus der Energieversorgungseinheit mit den geografischen Koordinaten der zugehörigen Straßenbeleuchtungseinrichtung an das mobile Anzeigegerät zu senden. Somit kann detektiert werden, ob an der e-Tankstelle gerade getankt wird oder nicht. Für den Fall, dass nicht getankt wird, kann gleichzeitig überprüft werden, ob sich ein Kraftfahrzeug an der e-Tankstelle befindet und somit eine Benutzung durch ein anderes Kraftfahrzeug unmöglich macht. Aufgrund dieser Information, die beispielsweise an einen entfernt angeordneten Server übermittelt wird, kann Nutzern auf deren mobilen Anzeigegeräten angezeigt werden, ob eine bestimmte e-Tankstelle frei ist oder nicht.

Weiterhin wird es möglich, letztlich nicht den an der e-Tankstelle getankten Strom abzurechnen, sondern lediglich die Stand- bzw. Parkzeit an der e-Tankstelle, die von der Erkennungseinheit an einen Server gemeldet wird. Diese Variante ist deshalb interessant, da das Verkaufen von Strom oftmals wesentlich weniger lukrativ ist als das Verkaufen von Parkzeit. Beispielsweise kann man während einer Stunde üblicherweise Strom im Wert von ungefähr 2,50 € tanken, wohingegen die Parkzeit mit 5 bis 10 € pro Stunde abgerechnet werden kann. Auf diese Weise kann das aufwändige Abrechnen des individuell getankten Stroms komplett entfallen.

Die erfindungsgemäße Erkennungseinheit kann dazu ausgelegt werden, vom Kamerasystem erfasste Kraftfahrzeuge anhand von typischen Merkmalen zu klassifizieren und somit e-Modelle von Modellen mit Verbrennungsmotor zu unterscheiden. Auf diese Weise kann ein Server oder entsprechend eingesetztes Überwachungspersonal darüber informiert werden, wann und wo in verbotener Weise ein Fahrzeug mit Verbrennungsmotor in einer e-Tankstelle parkt, woraufhin dann geeignete Maßnahmen ergriffen werden können.

Die Erkennungseinheit kann zudem ausgelegt sein, Kantenbilder oder Konturbilder von von dem Kamerasystem erfassten (Kraft-)Fahrzeugen auszugeben. Die Kanten- oder Konturbilder können eine schwarz-weiße Darstellung eines Ausschnitts des Kamerabilds bzw. der Abbildindizien sein, wobei die Kanten- oder Konturbilder insbesondere dann ausgegeben werden, wenn eine Höchstparkdauer von einem Fahrzeug überschritten wurde. Die Kanten- oder Konturbilder können das Fahrzeug zu Beginn des Parkvorgangs und nach dem Erreichen der Höchstparkdauer zeigen, wobei die Kanten- oder Konturbilder z.B. direkt an Überwachungspersonal übermittelt werden können. Die Kanten- oder Konturbilder können Zeit- und/oder Positionsinformationen (GPS-Informationen) umfassen.

Aufgrund der ausgegebenen Kanten- oder Konturbilder kann z.B. dem Überwachungspersonal ein Überschreiten der Höchstparkdauer angezeigt werden. Durch einen Vergleich der Bilder zu Beginn des Parkvorgangs mit den Bildern nach dem Erreichen der Höchstparkdauer, kann zudem festgestellt werden, ob sich das Fahrzeug während des Parkvorgangs bewegt hat. Kann keine Bewegung festgestellt werden, ist ein juristisch verwertbarer Beweis der Überschreitung der Höchstparkdauer erbracht. Die Höchstparkdauer für einen jeweiligen Parkplatzbereich kann in der Erkennungseinheit gespeichert sein.

Bei einer derartigen Beweisführung ist von Vorteil, dass durch die Verwendung von Kanten- oder Konturbilder lediglich die Umrisse eines Fahrzeugs zu erkennen sind, wodurch auch die bereits erwähnten strengen Datenschutzvorgaben für den öffentlichen Raum eingehalten werden können. Die Kanten- oder Konturbilder können beispielsweise durch einen Kantenfilter-Algorithmus, wie den Sobel-Algorithmus, aus den Abbildindizien erzeugt werden.

Bevorzugt ist die Erkennungseinheit dazu ausgebildet, einen Filteralgorithmus separat auf jeden Parkplatzbereich der Parkplatzfläche anzuwenden, um so Helligkeitsunterschiede zwischen den erfassten Parkplatzbereichen auszugleichen. Dies ermöglicht eine qualitativ hochwertige Auswertung der vom Kamerasystem gelieferten Abbildindizien, wenn sich beispielsweise bestimmte Parkplatzbereiche im Schatten und andere Parkplatzbereiche in der Sonne befinden.

Die Erkennungseinheit kann einen oder mehrere Mehrkernprozessoren umfassen, die je nach benötigter Rechenleistung zu- oder abschaltbar sind. Bevorzugt kommen bis zu vier Quad- oder Octacore-Prozessoren zum Einsatz. Je größer die erfasste Parkplatzfläche ist, desto höher ist die benötigte Rechenleistung.

Die von der Erkennungseinheit durchzuführende Auswertung wird erleichtert, wenn im Rahmen der Initialisierung des Kamerasystems unterschiedliche Zonen einschließlich deren geografischer Koordinaten eindeutig definiert werden. Diese Zonen entsprechen dann unterschiedlichen Parkplatzflächentypen, beispielsweise Parkplatzbereichen, e-Tankbereichen, Halteverbotsbereichen, Behindertenparkplätzen, etc.

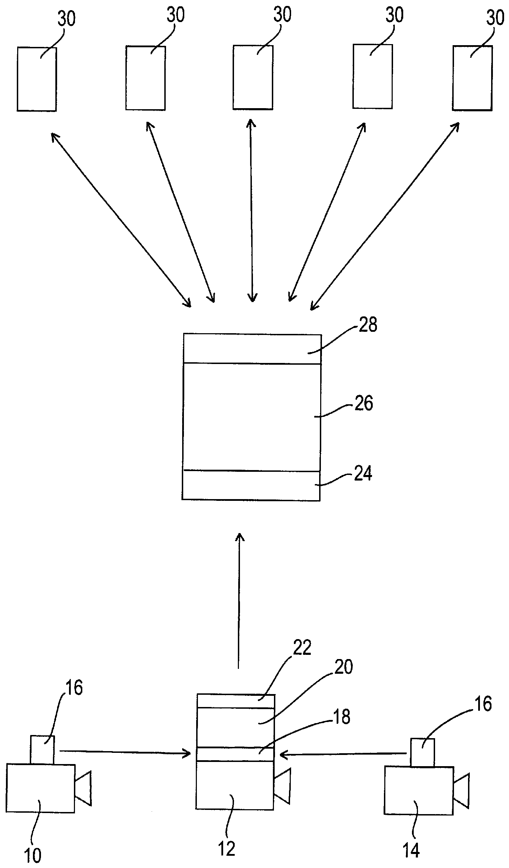

Das erfindungsgemäße Grundprinzip wird nachfolgend anhand der einzigen Figur erläutert, die eine schematische Darstellung von Komponenten zeigt, die erfindungsgemäß zum Einsatz gelangen können.

Im Bereich eines Straßenzugs sind insgesamt drei an nicht dargestellten Straßenbeleuchtungseinrichtungen montierte Kamerasysteme 10, 12, 14 vorgesehen, wobei die beiden Kamerasysteme 10, 14 jeweils mit einem Netzwerksender 16 ausgestattet sind. Die Einheiten aus Kamerasystemen 10, 14 und Netzwerksendern 16 sind dazu geeignet, die von den Kamerasystemen 10, 14 aufgenommenen Bilder an einen Netzwerkempfänger 18 zu übertragen, der mit dem Kamerasystem 12 gekoppelt ist.

Weiterhin ist mit dem Kamerasystem 12 eine erfindungsgemäße Erkennungseinheit 20 verbunden, in der die geografischen Koordinaten der sich im Sichtbereich der Kamerasysteme 10, 12, 14 befindlichen Parkplatzbereiche abgespeichert sind. Die Erkennungseinheit 20 ist dazu ausgebildet, in Abhängigkeit von den von den Kamerasystemen 10, 12, 14 gelieferten Bildern den genannten Parkplatzbereichen je einen Belegungsstatus zuzuordnen, der kennzeichnet, ob ein jeweiliger Parkplatzbereich frei oder besetzt ist.

Die Erkennungseinheit 20 stellt den jeweiligen Belegungsstatus mit den zugehörigen geografischen Koordinaten eines Parkplatzbereiches einer Sendeeinheit 22 zur Verfügung, die mit der Erkennungseinheit 20 gekoppelt ist.

Die Sendeeinheit 22 sendet diese Daten an eine Empfangseinheit 24 eines zentralen Servers 26.

In weiteren Straßenzügen sind - nicht dargestellte - weitere Kombinationen von Kamerasystemen, Netzwerksendern, Netzwerkempfängern, Erkennungseinheiten und Sendeeinheiten vorgesehen, die ebenfalls entsprechende Daten an die Empfangseinheit 24 des zentralen Servers 26 senden.

Der Server 26 verfügt über eine Sende-/Empfangseinheit 28, über die er den Belegungsstatus der von den Kamerasystemen 10, 12, 14 erfassten Parkplatzbereichen einschließlich der zugehörigen geografischen Koordinaten an eine Vielzahl von Anzeigegeräten 30 senden kann. Diese Anzeigegeräte 30 sind beispielsweise als internetfähige mobile Endgeräte ausgestaltet, auf denen einem jeweiligen Nutzer angezeigt werden kann, an welcher geografischen Position in seiner Nähe sich gerade freie Parkplatzbereiche befinden.

Die Anzeigegeräte 30 sind dazu geeignet, Nutzeranfragen an die Sende-/Empfangseinheit 28 des Servers 26 abzusetzen, um dem Server 26 beispielsweise mitteilen zu können, für welchen geografischen Bereich Parkplatzbereichsdaten an das jeweilige Anzeigegerät 30 übermittelt werden sollen.

Anstelle des vorstehend erläuterten Kamerasystems kann auch ein Radarsystem eingesetzt werden, so dass dann anstelle der Abbildindizien des Kamerasystems die Abbildindizien eines Radarsystems von der Erkennungseinheit verarbeitet werden. Ebenso kann ein Radarsystem zusätzlich zum Kamerasystem eingesetzt werden, so dass dann die Abbildindizien des Kamerasystems und die Abbildindizien eines Radarsystems von der Erkennungseinheit verarbeitet werden.
Im Rahmen der Erfindung ist also unter einem Kamerasystem zum einen ein reines Kamerasystem, zum anderen ein reines Radarsystem, und schließlich aber auch eine Kombination aus Kamera- und Radarsystem zu verstehen.

Die Erfindung ist nicht auf die vorstehend beschriebene Ausführungsform beschränkt, vielmehr sind hier beliebige Kombinationen im Rahmen der kompletten vorstehenden Beschreibung und der Patentansprüche denkbar.

### Bezugszeichenliste

- 10, 12, 14: Kamerasysteme
- 16: Netzwerksender
- 18: Netzwerkempfänger
- 20: Erkennungseinheit
- 22: Sendeeinheit
- 24: Empfangseinheit
- 26: Server
- 28: Sende-/Empfangseinheit
- 30: Anzeigegerät

## Patentansprüche

1. System aus zumindest einer Straßenbeleuchtungseinrichtung, einem daran montierten Kamerasystem (10, 12, 14), einer Erkennungseinheit (20), einer Sendeeinheit (22) und einem mobilen Anzeigegerät (30), wobei das Kamerasystem (10, 12, 14) zum Liefern von Abbildindizien von innerhalb einer Parkplatzfläche liegenden Parkplatzbereichen ausgebildet ist und wobei die Erkennungseinheit (20) ausgebildet ist, um
- die geografischen Koordinaten von sich im Sichtbereich des Kamerasystems (10, 12, 14) befindlichen Parkplatzbereichen abzuspeichern,
- in Abhängigkeit von den Abbildindizien den Parkplatzbereichen je einen Belegungsstatus zuzuordnen, der kennzeichnet, ob ein jeweiliger Parkplatzbereich frei oder besetzt ist,
- den jeweiligen Belegungsstatus zumindest der freien Parkplatzbereiche mit den zugehörigen geografischen Koordinaten der Sendeeinheit (22) zur Verfügung zu stellen,
wobei die Sendeeinheit (22) dazu ausgebildet ist, den jeweiligen Belegungsstatus zumindest der freien Parkplatzbereiche mit den zugehörigen geografischen Koordinaten an das mobile Anzeigegerät (30) zu senden, wobei die Erkennungseinheit (20) dazu ausgebildet ist, Bewegungen des Kamerasystems (10, 12, 14), welche durch Bewegungen der Straßenbeleuchtungseinrichtung relativ zur Parkplatzfläche bedingt sind, in den vom Kamerasystem (10, 12, 14) gelieferten Abbildindizien mittels eines Bilderverarbeitungsverfahrens derart zu kompensieren, dass die Abbildindizien durch die Bewegungen des Kamerasystems (10, 12, 14) nicht verfälscht sind und
wobei eine Markierung an einem Trägerelement der Straßenbeleuchtungseinrichtung im Sichtbereich des Kamerasystems (10, 12, 14) angebracht ist.

2. System nach einem der vorhergehenden Ansprüche,
**dadurch gekennzeichnet,**
**dass** die Abbildindizien ausschließlich Einzelbilder umfassen und/oder dass das Kamerasystem (10, 12, 14) ausgebildet ist, nacheinander jeweils Abbildindizien verschiedener Bereiche der Parkplatzfläche zu erfassen.

3. System nach einem der vorhergehenden Ansprüche,
**dadurch gekennzeichnet,**
**dass** die Erkennungseinheit (20) ausgebildet ist, einen Belegungsstatus unabhängig von vorgegebenen, beispielsweise durch Bodenlinien definierten, Parkplatzbereichen zu ermitteln.

4. System nach einem der vorhergehenden Ansprüche,
**dadurch gekennzeichnet,**
**dass** das Kamerasystem (10, 12, 14) und die Erkennungseinheit (20) in einem gemeinsamen Gehäuse angeordnet sind, wobei bevorzugt nur Daten betreffend den Belegungsstatus aus dem gemeinsamen Gehäuse ausgegeben werden.

5. System nach einem der vorhergehenden Ansprüche,
**dadurch gekennzeichnet,**
**dass** die Erkennungseinheit (20) und/oder das Kamerasystem (10, 12, 14) zumindest einen Beschleunigungssensor und/oder ein Gyroskop zur Erfassung von Bewegungen des Kamerasystems (10, 12, 14), welche durch Bewegungen der Straßenbeleuchtungseinrichtung relativ zur Parkplatzfläche bedingt sind, aufweist und/oder
**dass** das Kamerasystem (10, 12, 14) einen elektrisch ansteuerbaren Schwenk-Neigekopf zur Bewegung zumindest einer Kameraoptik relativ zur Parkplatzfläche und/oder ein Zoomobjektiv aufweist.

6. System nach einem der vorhergehenden Ansprüche,
**dadurch gekennzeichnet,**
**dass** das an der Straßenbeleuchtungseinrichtung angebrachte Kamerasystem (10, 12, 14) eine Mehrzahl von relativ zueinander stationären, unterschiedlich orientierten Kameras aufweist und/oder,
**dass** das Kamerasystem (10, 12, 14) stationär oder über eine Schwenk-Neige-Mechanik an der Straßenbeleuchtungseinrichtung angebracht ist.

7. System nach einem der vorhergehenden Ansprüche,
**dadurch gekennzeichnet,**
**dass** das Kamerasystem (10, 12, 14) an einer Auskragung der Straßenbeleuchtungseinrichtung befestigt ist.

8. System nach Anspruch 7,
**dadurch gekennzeichnet,**
**dass** das Kamerasystem (10, 12, 14) benachbart zu einem Beleuchtungsmodul der Straßenbeleuchtungseinrichtung angeordnet ist, wobei insbesondere der Abstand zwischen Kamerasystem (10, 12, 14) und dem Trägerelement größer ist als der Abstand zwischen dem Beleuchtungsmodul und dem Trägerelement.

9. System nach einem der vorhergehenden Ansprüche,
**dadurch gekennzeichnet,**
**dass** die Markierung an dem Trägerelement der Straßenbeleuchtungseinrichtung in einem bodennahen Bereich des Trägerelements angebracht ist.

10. System nach einem der vorhergehenden Ansprüche,
**dadurch gekennzeichnet,**
**dass** das Kamerasystem (10, 12, 14) zumindest zwei feststehende unterschiedlich orientierte Kameras aufweist, deren Sichtbereiche sich zumindest bereichsweise überlappen.

11. System nach Anspruch 9 und 10,
**dadurch gekennzeichnet,**
**dass** in dem sich überlappenden Sichtbereich die Markierung angeordnet ist.

12. System nach Anspruch 10 oder 11,
**dadurch gekennzeichnet,**
**dass** lediglich genau ein Prozessor in der Erkennungseinheit (20) vorgesehen ist, der wahlweise mit jeweils genau einer der Kameras koppelbar ist.

13. System nach einem der vorhergehenden Ansprüche,
**dadurch gekennzeichnet,**
**dass** zumindest ein Beleuchtungsmodul und/oder das Kamerasystem (10, 12, 14) jeweils ausschließlich mittels einer Magnetkopplung an der Straßenbeleuchtungseinrichtung gehalten sind.

14. System nach einem der vorhergehenden Ansprüche,
**dadurch gekennzeichnet,**
**dass** ein an der Straßenbeleuchtungseinrichtung montiertes Solarpanel zur Energieversorgung von Kamerasystem (10, 12, 14) und Erkennungseinheit (20) vorgesehen ist.

## Claims

1. A system comprising at least a street-lighting device; a camera system (10, 12, 14) mounted at the street-lighting device; a recognition unit (20); a transmission unit (22); and a mobile display unit (30), wherein the camera system (10, 12, 14) is configured for delivering image indications of parking space areas disposed within a parking space zone, and wherein the recognition unit (20) is configured to
- store the geographical coordinates of parking space areas located in the field of view of the camera system (10, 12, 14);
- associate a respective occupation status with the parking space areas in dependence on the image indications, said occupation status marking whether a respective parking space area is free or occupied; and
- to provide the respective occupation status of at least the free parking space areas with the associated geographical coordinates to the transmission unit (22),
wherein the transmission unit (22) is configured to transmit the respective occupation status of at least the free parking space areas with the associated geographical coordinates to the mobile display unit (30); wherein the recognition unit (20) is configured to compensate movements of the camera system (10, 12, 14) which are caused by movements of the street-lighting device relative to the parking space zone in the image indications delivered by the camera system (10, 12, 14) by means of an image processing method such that the image indications are not falsified by the movements of the camera system (10, 12, 14); and
wherein a marking is applied to a carrier element of the street-lighting device in the field of view of the camera system (10, 12, 14).

2. A system in accordance with one of the preceding claims,
**characterized in that**
the image indications exclusively comprise individual images; and/or **in that** the camera system (10, 12, 14) is configured to detect respective image indications of different areas of the parking space zone after one another.

3. A system in accordance with any one of the preceding claims,
**characterized in that**
the recognition unit (20) is configured to determine an occupation status independently of predefined parking space areas, for example defined by lines on the ground.

4. A system in accordance with any one of the preceding claims,
**characterized in that**
the camera system (10, 12, 14) and the recognition unit (20) are arranged in a common housing, with only data relating to the occupation status preferably being output from the common housing.

5. A system in accordance with any one of the preceding claims,
**characterized in that**
the recognition unit (20) and/or the camera system (10, 12, 14) has/have at least one acceleration sensor and/or a gyroscope for detecting movements of the camera system (10, 12, 14) which are caused by movements of the street-lighting device relative to the parking space zone; and/or
**in that** the camera system (10, 12, 14) has an electrically controllable swivel and tilt head for moving at least one camera optics relative to the parking space zone and/or has a zoom objective.

6. A system in accordance with any one of the preceding claims,
**characterized in that**
the camera system (10, 12, 14) attached to the street-lighting device has a plurality of cameras which are stationary relative to one another and are oriented differently; and/or
**in that** the camera system (10, 12, 14) is attached to the street-lighting device in a stationary manner or via a swivel and tilt mechanism.

7. A system in accordance with any one of the preceding claims,
**characterized in that**
the camera system (10, 12, 14) is fastened to a projection of the street-lighting device.

8. A system in accordance with claim 7,
**characterized in that**
the camera system (10, 12, 14) is arranged adjacent to a lighting module of the street-lighting device, with in particular the spacing between the camera system (10, 12, 14) and the carrier element being larger than the spacing between the lighting module and the carrier element.

9. A system in accordance with any one of the preceding claims,
**characterized in that**
the marking is applied to the carrier element of the street-lighting device in a region of the carrier element close to the ground.

10. A system in accordance with any one of the preceding claims,
**characterized in that**
the camera system (10, 12, 14) has at least two fixed-position, differently oriented cameras whose fields of view at least regionally overlap.

11. A system in accordance with claim 9 and claim 10,
**characterized in that**
the marking is arranged in the overlapping field of view.

12. A system in accordance with claim 10 or claim 11,
**characterized in that**
only exactly one processor is provided in the recognition unit (20) and is selectively couplable to a respective exactly one of the cameras.

13. A system in accordance with any one of the preceding claims,
**characterized in that**
at least one lighting module and/or the camera system (10, 12, 14) is/are respectively exclusively held at the street-lighting device by means of a magnetic coupling.

14. A system in accordance with any one of the preceding claims,
**characterized in that**
a solar panel installed at the street-lighting device is provided for the energy supply of the camera system (10, 12, 14) and of the recognition unit (20).

## Revendications

1. Système composé d'au moins un dispositif d'éclairage de rue, d'un système de caméras (10, 12, 14) monté sur celui-ci, d'une unité de reconnaissance (20), d'une unité d'émission (22) et d'un appareil d'affichage mobile (30), dans lequel le système de caméras (10, 12, 14) est conçu pour fournir des indices visuels de zones de stationnement situées dans une aire de stationnement et dans lequel l'unité de reconnaissance (20) est conçue pour
- enregistrer les coordonnées géographiques de zones de stationnement situées dans le champ de vision du système de caméras (10, 12, 14),
- en fonction des indices visuels, associer à chacune des zones de stationnement un statut d'occupation qui identifie si une zone de stationnement respective est libre ou occupée,
- mettre à la disposition de l'unité d'émission le statut d'occupation respectif d'au moins les zones de stationnement libres avec les coordonnées géographiques correspondantes (22),
dans lequel l'unité d'émission (22) est conçue pour envoyer à l'appareil d'affichage mobile (30) l'état d'occupation respectif d'au moins les zones de stationnement libres avec les coordonnées géographiques correspondantes,
dans lequel l'unité de reconnaissance (20) est conçue pour compenser des mouvements du système de caméras (10, 12, 14) qui sont provoqués par des mouvements du dispositif d'éclairage de rue par rapport à l'aire de stationnement, dans les indices visuels fournies par le système de caméras (10, 12, 14) au moyen d'un procédé de traitement d'image, de telle sorte que les indices visuels ne soient pas faussés par les mouvements du système de caméras (10, 12, 14) et
dans lequel un marquage est appliqué sur un élément porteur du dispositif d'éclairage de rue dans le champ de vision du système de caméras (10, 12, 14).

2. Système selon l'une des revendications précédentes,
**caractérisé en ce**
**que** les indices visuels comprennent exclusivement des images individuelles et/ou
**que** le système de caméras (10, 12, 14) est conçu pour détecter successivement des indices visuels de différentes zones de l'aire de stationnement.

3. Système selon l'une des revendications précédentes,
**caractérisé en ce**
**que** l'unité de reconnaissance (20) est conçue pour déterminer un statut d'occupation indépendamment de zones de stationnement prédéterminées définies, par exemple, par des lignes au sol.

4. Système selon l'une des revendications précédentes,
**caractérisé en ce**
**que** le système de caméras (10, 12, 14) et l'unité de reconnaissance (20) sont disposés dans un boîtier commun, de préférence seules des données concernant l'état d'occupation étant délivrées à partir du boîtier commun.

5. Système selon l'une des revendications précédentes,
**caractérisé en ce**
**que** l'unité de reconnaissance (20) et/ou le système de caméras (10, 12, 14) présentent au moins un capteur d'accélération et/ou un gyroscope pour détecter des mouvements du système de caméras (10, 12, 14) qui sont provoqués par des mouvements du dispositif d'éclairage de rue par rapport à l'aire de stationnement, et/ou
**que** le système de caméras (10, 12, 14) présente une tête pivotante et inclinable à commande électrique pour déplacer au moins une optique de caméras par rapport à l'aire de stationnement et/ou un objectif de zoom.

6. Système selon l'une des revendications précédentes,
**caractérisé en ce que**
le système de caméras (10, 12, 14) monté sur le dispositif d'éclairage de rue présente une pluralité de caméras fixes les unes par rapport aux autres et orientées différemment et/ou
que le système de caméras (10, 12, 14) est monté sur le dispositif d'éclairage de rue de manière fixe ou par l'intermédiaire d'un mécanisme de pivotement et d'inclinaison.

7. Système selon l'une des revendications précédentes,
**caractérisé en ce**
**que** le système de caméras (10, 12, 14) est fixé à un porte-à-faux du dispositif d'éclairage de rue.

8. Système selon la revendication 7,
**caractérisé en ce**
**que** le système de caméras (10, 12, 14) est disposé au voisinage d'un module d'éclairage du dispositif d'éclairage de rue, la distance entre le système de caméras (10, 12, 14) et l'élément porteur étant en particulier supérieure à la distance entre le module d'éclairage et l'élément porteur.

9. Système selon l'une des revendications précédentes,
**caractérisé en ce**
**que** le marquage est appliqué sur l'élément porteur du dispositif d'éclairage de rue dans une zone de l'élément porteur proche du sol.

10. Système selon l'une des revendications précédentes,
**caractérisé en ce**
**que** le système de caméras (10, 12, 14) présente au moins deux caméras fixes orientées différemment, dont les champs de vision se chevauchent au moins dans certaines zones.

11. Système selon les revendications 9 et 10,
**caractérisé en ce**
**que** le marquage est disposé dans le champ de vision en chevauchement.

12. Système selon la revendication 10 ou 11,
**caractérisé en ce**
**qu'**un seul processeur est prévu dans l'unité de reconnaissance (20), lequel peut être couplé sélectivement à une seule des caméras à la fois.

13. Système selon l'une des revendications précédentes,
**caractérisé en ce**
**qu'**au moins un module d'éclairage et/ou le système de caméras (10, 12, 14) sont chacun maintenus sur le dispositif d'éclairage de rue exclusivement au moyen d'un accouplement magnétique.

14. Système selon l'une des revendications précédentes,
**caractérisé en ce**
**qu'**un panneau solaire monté sur le dispositif d'éclairage de rue est prévu pour l'alimentation en énergie du système de caméras (10, 12, 14) et de l'unité de reconnaissance (20).
